(19) Europäisches Patentamt / European Patent Office / Office européen des brevets

(11) **EP 4 495 171 A1**

(12) **EUROPEAN PATENT APPLICATION**
published in accordance with Art. 153(4) EPC

(43) Date of publication:
**22.01.2025 Bulletin 2025/04**

(21) Application number: **23770937.3**

(22) Date of filing: **20.03.2023**

(51) International Patent Classification (IPC):
*C08J 9/04* (2006.01)   *C09J 7/26* (2018.01)

(52) Cooperative Patent Classification (CPC):
**C08J 9/04; C09J 7/26**

(86) International application number:
**PCT/JP2023/010864**

(87) International publication number:
**WO 2023/176985 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.03.2022   JP 2022043918**

(71) Applicant: SEKISUI CHEMICAL CO., LTD.
**Osaka-shi
Osaka
530-8565 (JP)**

(72) Inventor: **HAMADA, Masahiro
Tokyo 105-8566 (JP)**

(74) Representative: **Ter Meer Steinmeister & Partner
Patentanwälte mbB
Nymphenburger Straße 4
80335 München (DE)**

(54) **FOAM SHEET AND ADHESIVE TAPE**

(57) The foam sheet of the present invention has a permanent strain of 15% or more, wherein the permanent strain occurs as a result of compressing the foam sheet for a minute by stress of 1.2 MPa per 100 mm². The pressure-sensitive adhesive tape of the present invention includes the foam sheet of the present invention and a pressure-sensitive adhesive material disposed on one at least one surface of its multi-layer foam sheet. According to the present invention, it is possible to provide a foam sheet that is less likely to wrinkle even when formed into a roll, and a pressure-sensitive adhesive tape using the foam sheet.

## Fig. 1

**Description**

Technical Field

The present invention relates to a foam sheet and a pressure-sensitive adhesive tape including the foam sheet.

Background Art

In mobile electronic devices such as notebook personal computers, mobile phones, smartphones, and tablets, a display device may have a cushioning material disposed on the back side thereof in order to prevent damage or failure. The cushioning material is required to have high flexibility, and a foam sheet has been conventionally widely used.
The foam sheet may be used, for example, as a pressure-sensitive adhesive tape by coating a pressure-sensitive adhesive on at least one surface inside an electronic device. Conventionally, as a foam sheet used in these applications, a crosslinked polyolefin-based resin foam sheet that is obtained by foaming and crosslinking a foamable polyolefin-based resin sheet containing a thermally decomposable foaming agent is known (for example, see PTL 1).

Citation List

Patent Literature

PTLl: JP 2015-187232 A

Summary of Invention

Technical Problem

When a foam sheet is formed into a roll, the foam sheet can be continuously coated with a pressure-sensitive adhesive, which enables very efficient manufacturing of the pressure-sensitive adhesive tape. This facilitates mass production of the pressure-sensitive adhesive tape. However, after the foam sheet is wound into a roll, wrinkles may occur in the foam sheet. If wrinkles occur in the foam sheet, the quality of the foam sheet as a product is impaired.
Therefore, an object of the present invention is to provide a foam sheet that is less likely to wrinkle even when formed into a roll, and a pressure-sensitive adhesive tape using the foam sheet.

Solution to Problem

As a result of diligent studies on wrinkles on a foam sheet in a roll form, the present inventors found that since the thickness of the foam sheet after the foam sheet is wound is larger than the thickness of the foam sheet at the time when the foam sheet is wound, wrinkles occur on the foam sheet in a roll form. In addition, they found that such a foam sheet that has a large permanent strain occurring at the time of compressing can solve the above problem, and completed the present invention.
That is, the present invention provides the following [1] to [10].

[1] A foam sheet having a permanent strain of 15% or more, wherein the permanent strain occurs as a result of compressing the foam sheet for a minute by stress of 1.2 MPa per 100 mm$^2$.
[2] The foam sheet according to [1], having a 25% compressive strength of 600 kPa or less.
[3] The foam sheet according to [1] or [2], having an interlaminar strength of 0.6 MPa or more.
[4] The foam sheet according to any one of [1] to [3], having a closed cell ratio of 80% or more.
[5] The foam sheet according to any one of [1] to [4], having a gel fraction of 30 to 80%.
[6] The foam sheet according to any one of [1] to [5], wherein a larger oblateness of an oblateness of MD and an oblateness of TD of a cell is 3 or more.
[7] The foam sheet according to any one of [1] to [6], having a density of 0.05 to 0.3 g/cm$^3$.
[8] The foam sheet according to any one of [1] to [7], having a thickness of 0.03 to 2 mm.
[9] The foam sheet according to any one of [1] to [8], having an average cell size of 40 to 400 $\mu$m.
[10] A pressure-sensitive adhesive tape comprising the foam sheet according to any one of [1] to [9] above, and a pressure-sensitive adhesive material provided on at least one surface of the foam sheet.

Advantageous Effects of Invention

According to the present invention, it is possible to provide a foam sheet that is less likely to wrinkle even when formed into a roll, and a pressure-sensitive adhesive tape using the foam sheet.

Brief Description of Drawing

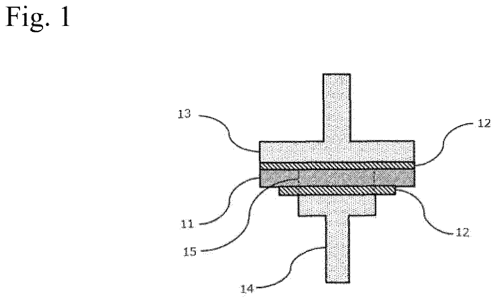

[Fig. 1] Fig. 1 is a schematic view showing an apparatus for measuring an interlaminar strength.

Description of Embodiments

Hereinafter, the present invention will be described in more detail by way of embodiments.

[Foam sheet]

(Permanent strain)

The foam sheet of the present invention has a permanent strain of 15% or more, where the permanent strain occurs as a result of compressing the foam sheet for a minute by stress of 1.2 MPa per 100 mm$^2$. When the permanent strain is less than 15%, the thickness of the foam sheet after the foam sheet is wound into a roll is larger than the thickness of the foam sheet at the time when the foam sheet is wound, and wrinkles may occur on the foam sheet. From the viewpoint of this, the permanent strain of the foam sheet of the present invention is preferably 17% or more, more preferably 20% or more. Note that, the upper limit of the range of the permanent strain of the foam sheet of the present invention is not particularly limited, but is preferably 50%, more preferably 40% from the viewpoint of sealability. Here, the permanent strain of the foam sheet can be measured by the method described in Examples later. In addition, the permanent strain of the foam sheet can be controlled by adjusting, for example, the kind of resin constituting the foam sheet and its rate, the average cell size, the oblateness of a cell, the thickness of the foam sheet, the density of the foam sheet, and the gel fraction of the foam sheet.

(25% Compressive strength)

The 25% compressive strength of the foam sheet of the present invention is preferably 600 kPa or less. In the case where the 25% compressive strength of the foam sheet is 600 kPa or less, when the foam sheet is wound into a roll, it is excellent in conformability and can prevent occurrence of defects such as lifting. From the viewpoint of this, the 25% compressive strength of the foam sheet is more preferably 300 kPa or less, still more preferably 200 kPa or less, yet still more preferably 100 kPa or less. The lower limit of the range of the 25% compressive strength of the foam sheet of the present invention is not particularly limited, but is generally 5 kPa. Note that, the 25% compressive strength of the foam sheet can be measured by the method described in Examples later. In addition, the 25% compressive strength of the foam sheet can be controlled by adjusting, for example, the kind of resin constituting the foam sheet and its rate, the average cell size, the oblateness of a cell, the thickness of the foam sheet, the density of the foam sheet, and the gel fraction of the foam sheet.

(Interlaminar strength)

The interlaminar strength of the foam sheet of the present invention is preferably 0.6 MPa or more. In the case where the interlaminar strength of the foam sheet is 0.6 MPa or more, when the foam sheet is used for a pressure-sensitive adhesive tape, the strength of the pressure-sensitive adhesive tape can be increased. As a result, the pressure-sensitive adhesive tape can be prevented from being damaged by an impact from the outside. From the viewpoint of this, the interlaminar strength of the foam sheet is more preferably 1.0 MPa or more, still more preferably 1.2 MPa or more. The upper limit of the range of the interlaminar strength of the foam sheet of the present invention is not particularly limited, but is generally 10 MPa. Note that, the interlaminar strength of the foam sheet can be measured by the method described in Examples later. In addition, the interlaminar strength of the foam sheet can be controlled by adjusting, for example, the kind of a resin constituting the foam sheet and its rate, the average cell size, the oblateness of a cell, the thickness of the foam sheet, the density of the foam sheet, and the gel fraction of the foam sheet.

(Closed cell ratio)

The closed cell ratio of the foam sheet of the present invention is preferably 80% or more. In the case where the closed cell ratio of the foam sheet is 80% or more, when the foam sheet is used for a sealing material, a dust-proof property and a waterproof property of the foam sheet can be improved. From the viewpoint of this, the closed cell ratio of the foam sheet is more preferably 90% or more, still more preferably 95% or more. The upper limit of the range of the closed cell ratio of the foam sheet of the present invention is not particularly limited, but is generally 100%. Note that, the closed cell ratio of the foam sheet can be measured by the method described in Examples later.

(Gel fraction)

The gel fraction of the foam sheet of the present invention is preferably 30 to 80%. When the gel fraction of the foam sheet is 30 to 80%, cells of the foam sheet can be small, and the interlaminar strength can be improved. From the viewpoint of this, the gel fraction of the multilayer foam sheet is more preferably 35 to 70%, still more preferably 40 to 60%. Note that, the gel fraction of the foam sheet can be measured by the method described in Examples.

(Oblateness of cell)

A larger oblateness of an oblateness of MD and an oblateness of TD of a cell of the foam sheet of the present invention is preferably 3 or more. In the present specification, the "MD" means Machine Direction and is a direction corresponding to, for example, an extrusion direction of a sheet. The "TD" means Transverse Direction and is a direction, which is orthogonal to the MD and is parallel to a surface of a sheet. When a larger oblateness of an oblateness of MD and an oblateness of TD of a cell is 3 or more, the restoring force of the cell in the thickness direction decreases, which makes it easy to achieve the foam sheet having a permanent strain of 15% or more. From the viewpoint of this, a larger oblateness of an oblateness of MD and an oblateness of TD of a cell is more preferably 5 or more, still more preferably 7 or more. Note that, the oblateness of MD and the oblateness of TD of the cell of the foam sheet can be measured by the method described in Examples later. In addition, during the production of the foam sheet, the oblateness of the MD and the oblateness of the TD of the cell of the foam sheet can be adjusted by stretching the foam sheet in at least one direction of the MD and the TD. Moreover, from the viewpoint of the stress relaxation ratio of the foam sheet, both the oblateness of the MD and the oblateness of the TD of the cell are more preferably 3 or more.

(Average cell size)

The average cell size of the foam sheet of the present invention is preferably 40 to 400 $\mu$m. As described later, the foam sheet may be used in any shape, but preferably has a thin width. In the case where the average cell size of the foam sheet is 40 to 400 $\mu$m, even when the foam sheet has a small width, the waterproof property of the foam sheet can be sufficiently secured. From the viewpoint of this, the average cell size of the foam sheet of the present invention is more preferably 100 to 3000 $\mu$m, still more preferably 150 to 250 $\mu$m. Note that, the average cell size of the foam sheet can be measured by the method described in Examples later. The average cell size used herein is an average of average cell sizes of MD and TD.

(Density)

The density of the foam sheet of the present invention is preferably 0.05 to 0.3 g/cm$^3$. When the density of the foam sheet is 0.05 to 0.3 g/cm$^3$, the permanent strain of the foam sheet of 15% or more is more easily achieved. From the viewpoint of this, the density of the foam sheet of the present invention is more preferably 0.05 to 0.25 g/cm$^3$, still more preferably 0.10 to 0.23 g/cm$^3$. Note that, the density of the foam sheet can be measured by the method described in Examples later.

(Expansion ratio)

The expansion ratio of the foam sheet of the present invention is preferably 3 folds or more. When the expansion ratio of the foam sheet is 3 folds or more, it is easier to achieve the foam sheet having a permanent strain of 15% or more. From the viewpoint of this, the density of the foam sheet of the present invention is more preferably 4 folds or more, still more preferably 5 folds or more. The upper limit of the range of the expansion ratio of the foam sheet of the present invention is not particularly limited, but is generally 30 folds, and is preferably 20 folds. Note that, the expansion ratio of the foam sheet can be measured by the method described in Examples later.

(Thickness)

The thickness of the foam sheet of the present invention is preferably 0.03 to 2 mm. When the thickness of the foam sheet is 0.03 to 2 mm, the permanent strain of the foam sheet of 15% or more is more easily achieved. From the viewpoint of this, the thickness of the foam sheet of the present invention is more preferably 0.05 to 1.0 mm, still more preferably 0.1 to 0.7 mm. Note that, the density of the foam sheet can be measured by the method described in Examples later.

[Resin constituting foam sheet]

The foam sheet of the present invention may contain a polyolefin resin. Use of a polyolefin resin makes it easy to achieve the permanent strain of the foam sheet of 15% or less.

(Polyolefin resin)

The polyolefin resin is a thermoplastic resin, and specific examples thereof include polyethylene resins, polypropylene resins, polybutene resins, and ethylene-vinyl acetate copolymers. Among these, polyethylene resins and ethylene-vinyl acetate copolymers are preferable, and a resin obtained by mixing a polyethylene resin and an ethylene-vinyl acetate copolymer is more preferable. When the polyethylene resin and the ethylene-vinyl acetate copolymer are used, the oblateness of a cell is less likely to increase, and the permanent strain of the foam sheet of 15% or less is more easily achieved. In addition, the flexibility of the foam sheet can be easily secured.

Further, examples of the polyethylene resin include polyethylene resins polymerized with polymerization catalysts such as Ziegler-Natta catalysts, metallocene catalysts, and chromium oxide compounds, and polyethylene resins polymerized with metallocene catalysts are preferably used.

(Metallocene catalyst)

Examples of the metallocene catalysts can include compounds such as bis(cyclopentadienyl) metal complexes having a structure in which a transition metal is sandwiched between $\pi$ electron unsaturated compounds. More specifically, examples thereof can include compounds in which one or more cyclopentadienyl rings or analogs thereof are present as ligands in tetravalent transition metals such as titanium, zirconium, nickel, palladium, hafnium, and platinum.

Such metallocene catalysts have uniform properties of active sites and each active site has the same activity. Since polymers synthesized using metallocene catalysts have high uniformities in molecular weight, molecular weight distribution, composition, composition distribution, and the like, crosslinking uniformly proceeds when sheets containing polymers synthesized using metallocene catalysts are crosslinked. Since the uniformly crosslinked sheets uniformly foam, it is easy to stabilize the physical properties. Further, since they can be uniformly stretched, the thickness of foams can be uniform.

Examples of ligands can include cyclopentadienyl rings and indenyl rings. Such a cyclic compound is optionally substituted with a hydrocarbon group, a substituted hydrocarbon group, or a hydrocarbon-substituted metalloid group. Examples of the hydrocarbon group include a methyl group, an ethyl group, various propyl groups, various butyl groups, various amyl groups, various hexyl groups, 2-ethylhexyl group, various heptyl groups, various octyl groups, various nonyl groups, various decyl groups, various cetyl groups, and a phenyl group. The term "various" means various isomers including n-, sec-, tert-, and iso-.

Further, a cyclic compound polymerized as an oligomer may be used as a ligand.

Further, monovalent anion ligands such as chlorine and bromine, divalent anion chelate ligands, hydrocarbons, alkoxides, arylamides, aryloxides, amides, phosphides, arylphosphides, or the like may be used other than $\pi$ electron unsaturated compounds.

Examples of metallocene catalysts containing tetravalent transition metals and ligands include cyclopentadienyltitanium tris(dimethylamide), methylcyclopentadienyltitanium tris(dimethylamide), bis(cyclopentadienyl)titanium dichloride, and dimethylsilyltetramethylcyclopentadienyl-t-butylamidozirconium dichloride.

A metallocene catalyst combined with a specific co-catalyst (promoter) exert its action as a catalyst when polymerizing various olefins. Specific examples of the co-catalyst include methylaluminoxane (MAO) and boron compounds. The ratio of the co-catalyst to be used with respect to the metallocene catalyst is preferably 10 to 1,000,000 mol times, more preferably 50 to 5,000 mol times.

Further, the polyethylene resin is preferably linear low density polyethylene. The linear low density polyethylene is more preferably linear low density polyethylene obtained by copolymerizing ethylene (for example, 75 mass% or more, preferably 90 mass% or more with respect to the total monomer amount) and a small amount of $\alpha$-olefin, as required. Specifically, examples of the $\alpha$-olefin include propylene, 1-butene, 1-pentene, 4-methyl-1-pentene, 1-hexene, 1-heptene, and 1-octene. Among these, $\alpha$-olefins having 4 to 10 carbon atoms are preferable.

The density of the polyethylene resin, for example, the aforementioned linear low density polyethylene is preferably 0.870 to 0.925 g/cm$^3$, more preferably 0.890 to 0.925 g/cm$^3$, still more preferably 0.910 to 0.925 g/cm$^3$, from the

viewpoint of flexibility. A plurality of polyethylene resins can be used as the polyethylene resin, and a polyethylene resin having a density other than the aforementioned range may be added.

Examples of the ethylene-vinyl acetate copolymers used as a polyolefin-based resin include ethylene-vinyl acetate copolymers containing, for example, preferably 6 to 40 mass%, more preferably 10 to 35 mass%, still more preferably 12 to 33 mass% of vinyl acetate.

The ethylene-vinyl acetate copolymer used in the present invention may contain a vinyl alcohol generated by hydrolyzing a part of vinyl acetate in addition to ethylene and vinyl acetate.

Further, examples of polypropylene resins include homopolypropylene and propylene-$\alpha$-olefin copolymers containing 50 mass% or more of propylene. These may be used individually by one type, or two or more of them may be used in combination. Specifically, examples of $\alpha$-olefins constituting the propylene-$\alpha$-olefin copolymer can include ethylene, 1-butene, 1-pentene, 4-methyl-1-pentene, 1-hexene, 1-heptene, and 1-octene. Among these, $\alpha$-olefins having 6 to 12 carbon atoms are preferable.

Examples of the polybutene resins can include homopolymers of butene-1 and copolymers with ethylene or propylene.

[Mass ratio between polyethylene resin and ethylene-vinyl acetate copolymer]

When the resin obtained by mixing the polyethylene resin and the ethylene-vinyl acetate copolymer is used as the polyolefin resin, a mass ratio between the polyethylene resin and the ethylene-vinyl acetate copolymer is preferably 90:10 to 40:60. Within this range, the foam sheet that realizes the effect of the present invention can be easily manufactured. From the viewpoint of obtaining the foam sheet that has a higher effect, the mass ratio between the polyethylene resin and the ethylene-vinyl acetate copolymer more preferably falls within a range of 85:15 to 45:55, still more preferably falls within a range of 80:20 to 50:50.

The foam sheet of the present invention may contain a resin other than the polyolefin resin within a range that does not inhibit the effect of the present invention. However, from the viewpoint of achieving a foam sheet that has a permanent strain of 15% or less, the rate of the polyolefin resin in the resin component of the foam sheet of the present invention is preferably high. Specifically, the rate of the polyolefin resin in the resin component of the foam sheet of the present invention is preferably 80 to 100 mass%, more preferably 90 to 100 mass%, still more preferably 95 to 100 mass%, yet still more preferably 99 to 100 mass%.

[Additive]

The foam sheet of the present invention is preferably obtained by foaming the aforementioned resin and a foamable composition containing a foaming agent. The foaming agent is preferably a thermally decomposable foaming agent.

As the thermally decomposable foaming agent, organic foaming agents and inorganic foaming agents can be used. Examples of the organic foaming agents include azo compounds such as azodicarbonamide, azodicarbon acid metal salt (such as barium azodicarboxylate), and azobisisobutyronitrile, nitroso compounds such as N,N'-dinitrosopentamethylenetetramine, hydrazine derivatives such as hydrazodicarbonamide, 4,4'-oxybis (benzenesulfonylhydrazide), and toluenesulfonylhydrazide, and semicarbazide compounds such as toluenesulfonylsemicarbazide.

Examples of the inorganic foaming agents include ammonium carbonate, sodium carbonate, ammonium bicarbonate, sodium bicarbonate, ammonium nitrite, sodium borohydride, and anhydrous monosodium citrate.

Among these, azo compounds are preferable, and azodicarbonamide is more preferable, from the viewpoints of obtaining fine cells, economic efficiency, and safety.

The thermally decomposable foaming agents may be used alone, or two or more of them may be used in combination.

The amount of the foaming agent to be mixed in the foamable composition is preferably 1 to 20 parts by mass, more preferably 1.5 to 15 parts by mass, further preferably 3 to 10 parts by mass, with respect to 100 parts by mass of the resin. When the amount of the foaming agent to be mixed is 1 part by mass or more, the foamable sheet is appropriately foamed, and appropriate flexibility can be imparted to the foam sheet. Further, when the amount of the foaming agent to be mixed is 20 parts by mass or less, the foam sheet is prevented from foaming more than necessary, and the mechanical strength of the foam sheet and the like can be enhanced.

The foamable composition may contain a decomposition temperature adjuster. The decomposition temperature adjuster is contained to have an adjusting function such as lowering the decomposition temperature of the thermally decomposable foaming agent and accelerating the degradation rate, and specific compounds include zinc oxide, zinc stearate, and urea. The decomposition temperature adjuster is contained, for example, in an amount of 0.01 to 5 parts by mass with respect to 100 parts by mass of the resin, for adjusting the surface conditions of the foam sheet.

The foamable composition may contain an antioxidant. Examples of the antioxidant include phenolic antioxidants such as 2,6-di-t-butyl-p-cresol, sulfur antioxidants, phosphorus antioxidants, and amine antioxidants. The antioxidant is contained, for example, in an amount of 0.01 to 5 parts by mass with respect to 100 parts by mass of the resin.

The foamable composition may contain commonly used additives for foams such as heat stabilizers, colorants, flame retardants, antistatic agents, fillers other than these examples.

The foam sheet contains a polyolefin resin as a main component, and the content of the polyolefin resin is, for example, 70 mass% or more, preferably 80 mass% or more, more preferably 90 mass% or more, based on the total amount of the foam sheet.

[Method for producing foam sheet]

The foam sheet of the present invention is not particularly limited but can be produced by heating a foamable sheet composed of a foamable composition containing at least a resin and a thermally decomposable foaming agent and foaming the thermally decomposable foaming agent. Further, the foamable sheet is preferably crosslinked, and the crosslinked foamable sheet is heated to be foamed.

More specifically, the method for manufacturing a foam sheet preferably includes steps (1) to (3) below.

Step (1): a step of forming a foamable sheet consisting of a foamable composition containing at least a resin and a thermally decomposable foaming agent;
Step (2): a step of irradiating the foamable sheet with ionizing radiation to crosslink the foamable sheet; and
Step (3): a step of heating the crosslinked foamable sheet and foaming the thermally decomposable foaming agent to obtain a foam sheet.

In step (1), the method for forming a foamable sheet is not specifically limited, but a resin and an additive may be supplied to an extruder and melt-kneaded, so that a foamable composition is extruded from the extruder into a sheet, for example. Further, the foamable sheet may be formed by pressing the foamable composition. The forming temperature of the foamable sheet (that is, the temperature at the time of extrusion or the temperature at the time of pressing) is preferably 50 to 250°C, more preferably 80 to 180°C.

As the method for crosslinking the foamable composition in step (2), a method of irradiating the foamable sheet with ionizing radiation such as electron beams, $\alpha$ rays, $\beta$ rays, and $\gamma$ rays is used. The irradiation dose of the ionizing radiation may be adjusted so that the crosslinking degree of the foam sheet to be obtained is within the aforementioned desired range but is preferably 1 to 12 Mrad, more preferably 1.5 to 10 Mrad.

In step (3), the heating temperature at which the foamable composition is heated to foam the thermally decomposable foaming agent may be the foaming temperature of the thermally decomposable foaming agent or more but is preferably 200 to 300°C, more preferably 220 to 280°C. In step (3), the foamable composition is foamed so that cells are formed to form a foam.

Moreover, in this production method, the foam sheet may be thinned by a method such as rolling and stretching, and the oblateness of a cell may be adjusted by rolling and stretching.

However, this production method is not limited to the above, and a foam sheet may be obtained by a method other than the above. For example, crosslinking may be performed by mixing an organic peroxide in the foamable composition in advance and heating the foamable sheet to decompose the organic peroxide, instead of irradiation with ionizing radiation.

Further, if crosslinking is not necessary, the step (2) may be omitted. In such a case, an uncrosslinked foamable sheet may be heated to be foamed in the step (3).

[Pressure-sensitive adhesive tape]

The pressure-sensitive adhesive tape of the present invention includes a foam sheet of the present invention and a pressure-sensitive adhesive material provided on at least one surface of the foam sheet. The pressure-sensitive adhesive tape can adhere to another member such as a support member via the pressure-sensitive adhesive material. The pressure-sensitive adhesive tape may be foam sheet provided with the pressure-sensitive adhesive material on each of both sides or may be provided with the pressure-sensitive adhesive material on one side.

Further, the pressure-sensitive adhesive material may include at least a pressure-sensitive adhesive layer and may be a pressure-sensitive adhesive layer alone laminated on the surface of the foam sheet or a double-sided pressure-sensitive adhesive sheet attached to the surface of the foam sheet. However, it is preferably a pressure-sensitive adhesive layer alone. The double-sided pressure-sensitive adhesive sheet includes a base material and a pressure-sensitive adhesive layer provided on each of both sides of a base material. The double-sided pressure-sensitive adhesive sheet is used for attaching one pressure-sensitive adhesive layer to the foam sheet and attaching the other pressure-sensitive adhesive layer to another member.

The pressure-sensitive adhesive constituting the pressure-sensitive adhesive layer is not particularly limited and acrylic pressure-sensitive adhesives, urethane pressure-sensitive adhesives, rubber pressure-sensitive adhesives, silicone pressure-sensitive adhesives, and the like can be used, for example. A release sheet such as a mold release paper may be bonded further on the pressure-sensitive adhesive material.

A thickness of the pressure-sensitive adhesive layer is preferably 5 to 200 $\mu$m, more preferably 7 to 150 $\mu$m, still more preferably 10 to 100 $\mu$m.

[Foam sheet roll]

The foam sheet of the present invention can be made into a roll. The roll makes it easy to store and is convenient for transportation. When used, it can be unwound from the roll for use. As described above, the permanent strain of the foam sheet of the present invention is 15% or more. Therefore, when a foam sheet is wound into a roll, occurrence of troubles such as wrinkles can be prevented. Moreover, in a case where the compressive strength is equal to or lower than a predetermined value as described above, when the foam sheet is wound into a roll, occurrence of defects such as lifting can be prevented.

[Application of foam sheet]

The application of the foam sheet of is not particularly limited but is preferably used in the application of electronic devices. Examples of the electronic devices include mobile phones such as smartphones, and mobile electronic devices such as game devices, electronic notebooks, tablet terminals, and notebook personal computers. The foam sheet can be used as a cushioning inside an electronic device and is preferably used as a cushioning material for display devices. In addition, the foam sheet may be used as a sealing material that fills, for example, a gap between components in an electronic device.

The foam sheet may be used in any shape and may be used, for example, in thin width. Specifically, it may be frame-shaped such as a long rectangular shape or a square shape, L-shaped, U-shaped, or the like. The width thereof is, for example, 5 mm or less, preferably 3 mm or less, more preferably 1 mm or less. In addition, it is, for example, 0.1 mm or more.

The foam sheet used as a cushioning material for display devices may be disposed, for example, on the back side of a display panel provided in various electronic devices, and may be used to absorb the impact acting on the display panel. In this case, the foam sheet may be disposed on a support member disposed on the back side of the display panel. The support member constitutes, for example, a part of the housing of various electronic devices.

The foam sheet used in an electronic device may be provided with a pressure-sensitive adhesive material, as described above, and may be pasted on a display panel, a support member, or the like with the pressure-sensitive adhesive material. In particular, since the foam sheet of the second invention of the present invention is excellent in resistance to impact at low speeds in addition to resistance to impact at high speeds, it can be suitably used for pasting, fixing, and the like with a device such as a wall-mounted television having a large weight.

Examples

The present invention will be described in more detail with reference to Examples, but the present invention is not limited to these Examples in any way.

[Measurement method]

The measurement method and the evaluation method of the respective physical properties are as follows.

<Thickness>

The measurement was performed with a dial gauge.

<Density and expansion ratio>

The specific volumes (unit: cc/g) of the foam sheet before and after foaming were measured. Then, the expansion ratio was calculated based on specific volume after foaming/specific volume before foaming. In addition, the density was calculated from the measured specific volume.

<Average cell size and oblateness of cell>

The foam sheet was cut in the thickness direction (ZD) along the MD and the TD, and a 200x magnified photograph was taken using a digital microscope (KEYENCE CORPORATION, product name "VHX-900"). In the enlarged taken photograph, the cell size of the MD, the cell size of the TD, and the cell size of the ZD were measured for all the cells existing in a cross section having a length of 2 mm in MD and TD, and its operation was repeated five times. Then, the average values of the respective cell sizes of the MD, the TD, and the ZD of all cells were considered as the average cell sizes of the MD, the TD, and the ZD. Then, an average of average cell sizes of MD and TD was considered as an average cell size. An oblateness of the MD of a cell was calculated by dividing the average cell size of the MD by the average cell size of the ZD. Moreover, an oblateness of the TD of a cell was calculated by dividing the average cell size of the TD by the average cell size of the ZD.

<25% Compressive strength>

The measurement was performed at a measurement temperature of 23°C by the measurement method according to JIS K6767.

<Interlaminar strength>

Fig. 1 shows a schematic view of a testing apparatus for evaluating an interlaminar strength. After Primer (available from CEMEDINE CO., LTD. "PPX Primer") was coated on a 25 mm square area of a foam sheet 11, an adhesive 12 (available from CEMEDINE CO., LTD., "PPX") was added dropwise in the center of the coated portion so as to be coated in a diameter of 5 mm. Immediately after that, an aluminum jig 13 with 25 mm square was placed on the portion to which the adhesive was added dropwise, and the foam sheet and the jig 13 were subjected to compression bonding. Then, the foam sheet was cut along the size of the jig 13. Primer was coated on the surface of the cut foam sheet to which the jig 13 was not attached, and the adhesive 12 was added dropwise to the center of the coated portion so as to be coated in a diameter of 5 mm. Immediately after that, an aluminum jig 14 with 10 mm square was placed on the portion to which the adhesive was added dropwise, and the foam sheet and the jig 14 were subjected to compression bonding. After the adhesive that had protruded around the periphery of the jig 14 was wiped off, a cutting 15 was made in the foam sheet along the size of the jig 14. This was allowed to stand at room temperature for 30 minutes to cure the adhesive, and a sample for measuring the interlaminar strength was obtained.

Next, a 1 kN load cell was placed in a tester (available from A&D Company, Limited "TENSILON universal material testing instrument") equipped with a thermostat bath so that tests were performed in the thermostat bath. Then, the sample for measuring the interlaminar strength was attached to the tester so that the sheet surface of the foam sheet was perpendicular to the tensile direction. After the temperature of the thermostat bath was set to 23 °C, it was allowed to stand until the temperature of the sample for measuring the interlaminar strength reached 23°C. Then, one side of the jig was pulled vertically upward at a rate of 100 mm/min, and only an area of 1 cm square of the foam sheet was peeled off. The maximum load at this time was measured and was used as the first measurement result. The same operation was repeated three times, and its average value was considered as the interlaminar strength.

<Closed cell ratio>

From the foam sheet, a flat square test piece with a side of 5 cm was cut out. The thickness of the test piece was measured to calculate the appearance volume V1 of the test piece, and the mass W1 of the test piece was measured. Then, the volume V2 occupied by the cells was calculated based on the following formula. The density of the test piece was referred to as p(g/cm$^3$).

$$\text{Volume V2 occupied by cells} = V1 - W1/\rho$$

Subsequently, the test piece was submerged into distilled water at 23°C to a depth of 100 mm from the water surface, to apply a pressure of 15 kPa to the test piece for 3 minutes. Thereafter, the test piece was taken out of water, and water adhering to the surface of the test piece was removed, the mass W2 of the test piece was measured, and the closed cell ratio F 1 was calculated based on the following formula.

$$\text{Closed cell ratio F1 (\%)} = 100 - 100 \times (W2-W1)/V2$$

<Gel fraction>

A test piece of about 100 mg was taken from the foam sheet, and a mass A (mg) of the test piece was precisely weighed. Next, the test piece was immersed in 30 cm$^3$ of xylene at 120°C and was allowed to stand for 24 hours, and then filtered through a 200-mesh wire net to collect the insoluble matter on the wire net. The insoluble matter was then dried under vacuum, and a mass B (mg) of the insoluble matter was precisely weighed. From the obtained value, the gel fraction (mass%) was calculated using the following equation.

$$\text{Gel fraction (mass\%)} = 100 \times (\text{B/A})$$

<Permanent strain>

The foam sheet was cut into a plane square shape having a size of 10 mm × 10 mm and was laminated until the thickness reached about 4 mm, to produce a test piece. Then, the thickness of the test piece (C) was measured. The test piece was compressed to a stress of 1.2 MPa under the condition of a rate of 5 mm/min using a tensile tester (available from SHIMADZU CORPORATION, Autograph AGS-X), and was allowed to stand for a minute in this state. Then, the compression was released to measure the thickness (D) of the test piece after the compression. Then, the permanent strain ratio was calculated based on the following equation. Note that, the permanent strain ratio was measured in an environment of 23°C and 50% RH.

$$\text{Permanent strain ratio (\%)} = (1\text{-D/C}) \times 100$$

<Evaluation of occurrence of wrinkles on foam sheet>

A foam sheet with a length of 300 m was wound by a tension of 20 N, to produce a foam sheet roll. The foam sheet roll was stored in a temperature environment of 23°C for one week. The foam sheet roll was opened and presence or absence of a wrinkle having a length of more than 5 cm was confirmed. Then, occurrence of the wrinkle on the foam sheet was evaluated under the following evaluation criteria.

(Evaluation criteria)

Good: No wrinkle having a length of more than 5 cm was found.
Poor: A wrinkle having a length of more than 5 cm was found.

The materials used in Examples and Comparative Examples are as follows.

- Polyolefin resin (a): NOVATEC EVA LV440 (available from Japan polyethylene Corporation., ethylene-vinyl acetate copolymer, content of vinyl acetate 15 mass%)
- Polyolefin resin (b): KERNEL (registered trademark) KF283 (available from Japan polyethylene Corporation, ethylene/α-olefin copolymer (LLDPE) polymerized with a metallocene catalyst)
- Thermally decomposable foaming agent: azodicarbonamide
- Decomposition temperature adjuster: zinc oxide, product name "OW-212F", available from Sakai Chemical Industry Co., Ltd.
- Phenolic antioxidant: 2,6-di-t-butyl-p-cresol

[Production method of foam sheet]

The foam sheets of the Examples 1 to 11 and Comparative Examples 1 and 2 were produced as described below.

<Example 1>

Twenty parts by mass of the polyolefin resin (a), 80 parts by mass of the polyolefin resin (b), 3.5 parts by mass of the thermally decomposable foaming agent, 1 part by mass of the decomposition temperature adjuster, and 0.5 parts by mass of the phenolic antioxidant were prepared as raw materials. These materials were melt-kneaded and then pressed, to obtain a foamable resin sheet with a thickness of 0.5 mm. Both sides of the foamable resin sheet obtained were irradiated with 7 Mrad of an electron beam at an acceleration voltage of 500 keV, to crosslink the foamable resin sheet. Next, the crosslinked foamable resin sheet was heated to 250°C to be foamed while stretched in MD and TD so as to achieve the oblatenesses described in Table 1, to obtain a foam sheet having a density of 0.22 g/cm$^3$ and a thickness of 0.20 mm.

<Example 2>

A foam sheet was obtained in the same manner as in Example 1 except that stretching was performed in MD and TD so as to achieve the oblatenesses described in Table 1.

<Example 3>

A foam sheet was obtained in the same manner as in Example 1 except that the amount of the thermally decomposable foaming agent to be mixed was changed from 3.5 parts by mass to 3 parts by mass, the acceleration voltage was changed from 500 keV to 1,000 keV, the radiation dose of the electron beam was changed from 7 Mrad to 6 Mrad, and stretching was performed in MD and TD so as to achieve the oblatenesses described in Table 1.

<Example 4>

A foam sheet was obtained in the same manner as in Example 1 except that the amount of the thermally decomposable foaming agent to be mixed was changed from 3.5 parts by mass to 3 parts by mass, and the acceleration voltage was changed from 500 keV to 1,000 keV.

<Example 5>

A foam sheet was obtained in the same manner as in Example 1 except that the amount of the thermally decomposable foaming agent to be mixed was changed from 3.5 parts by mass to 3 parts by mass, the acceleration voltage was changed from 500 keV to 1,000 keV, the radiation dose of the electron beam was changed from 7 Mrad to 6 Mrad, and stretching was performed in MD and TD so as to achieve the oblatenesses described in Table 1.

<Example 6>

A foam sheet was obtained in the same manner as in Example 1 except that the amount of the thermally decomposable foaming agent to be mixed was changed from 3.5 parts by mass to 4.5 parts by mass, the acceleration voltage was changed from 500 keV to 1,000 keV, and stretching was performed in MD and TD so as to achieve the oblatenesses described in Table 1.

<Example 7>

A foam sheet was obtained in the same manner as in Example 1 except that the amount of the thermally decomposable foaming agent to be mixed was changed from 3.5 parts by mass to 4.5 parts by mass, the acceleration voltage was changed from 500 keV to 1,000 keV, the radiation dose of the electron beam was changed from 7 Mrad to 6 Mrad, and stretching was performed in MD and TD so as to achieve the oblatenesses described in Table 1.

<Example 8>

A foam sheet was obtained in the same manner as in Example 1 except that the amount of the thermally decomposable foaming agent to be mixed was changed from 3.5 parts by mass to 8 parts by mass, and stretching was performed in MD and TD so as to achieve the oblatenesses described in Table 1.

<Example 9>

The amount of the polyolefin resin (a) to be mixed was changed from 20 parts by mass to 30 parts by mass, the amount of the polyolefin resin (b) to be mixed was changed from 80 parts by mass to 70 parts by mass, and the amount of the thermally decomposable foaming agent to be mixed was changed from 3.5 parts by mass to 8 parts by mass. The acceleration voltage was changed from 500 keV to 1,000 keV, and the foamable resin sheet was stretched in MD and TD so as to achieve the oblatenesses described in Table 1. Aside from the above, a foam sheet was obtained in the same manner as in Example 1.

<Example 10>

A foam sheet was obtained in the same manner as in Example 1 except that the amount of the polyolefin resin (a) to be mixed was changed from 20 parts by mass to 40 parts by mass, the amount of the polyolefin resin (b) to be mixed was changed from 80 parts by mass to 60 parts by mass, the acceleration voltage was changed from 500 keV to 1,000 keV, and stretching was performed in MD and TD so as to achieve the oblatenesses described in Table 1.

<Example 11>

A foam sheet was obtained in the same manner as in Example 1 except that the amount of the polyolefin resin (a) to be mixed was changed from 20 parts by mass to 50 parts by mass, the amount of the polyolefin resin (b) to be mixed was changed from 80 parts by mass to 50 parts by mass, the acceleration voltage was changed from 500 keV to 1,000 keV, and stretching was performed in MD and TD so as to achieve the oblatenesses described in Table 1.

<Comparative Example 1>

A foam sheet was obtained in the same manner as in Example 1 except that the amount of the thermally decomposable foaming agent to be mixed was changed from 3.5 parts by mass to 4 parts by mass, the radiation dose of the electron beam was changed from 7 Mrad to 6 Mrad, and stretching was performed in MD and TD so as to achieve the oblatenesses described in Table 1.

<Comparative Example 2>

A foam sheet was obtained in the same manner as in Example 1 except that the amount of the thermally decomposable foaming agent to be mixed was changed from 3.5 parts by mass to 7 parts by mass, the radiation dose of the electron beam was changed from 7 Mrad to 6 Mrad, and stretching was performed in MD and TD so as to achieve the oblatenesses described in Table 1.

The evaluation results of Examples 1 to 11 and Comparative Examples 1 and 2 are shown in Table 1.

[Table 1]

| | | | Example 1 | Example 2 | Example 3 | Example 4 | Example 5 | Example 6 | Example 7 | Example 8 | Example 9 | Example 10 | Example 11 | Comparative Example 1 | Comparative Example 2 |
|---|---|---|---|---|---|---|---|---|---|---|---|---|---|---|---|
| Formulation (part(s) by mass) | Polyolefin resin | (a) LV440 | 20 | 20 | 20 | 20 | 20 | 20 | 20 | 20 | 30 | 40 | 50 | 20 | 20 |
| | | (b) KERNEL KF283 | 80 | 80 | 80 | 80 | 80 | 80 | 80 | 80 | 70 | 60 | 50 | 80 | 80 |
| | Thermally decomposable foaming agent | Azodicarbonamide | 3.5 | 3.5 | 3 | 3 | 3 | 4.5 | 4.5 | 8 | 3.5 | 3.5 | 3.5 | 4 | 7 |
| | Antioxidant | 2,6-Di-t-butyl-p-cresol | 0.5 | 0.5 | 0.5 | 0.5 | 0.5 | 0.5 | 0.5 | 0.5 | 0.5 | 0.5 | 0.5 | 0.5 | 0.5 |
| | Decomposition temperature adjuster | GW-212F | 1 | 1 | 1 | 1 | 1 | 1 | 1 | 1 | 1 | 1 | 1 | 1 | 1 |
| Manufacturing conditions | Thickness of foamable resin sheet (mm) | | 0.5 | 0.6 | 0.7 | 0.7 | 0.7 | 0.8 | 0.9 | 0.5 | 1.0 | 1.0 | 1.0 | 0.3 | 0.3 |
| | Acceleration voltage (keV) | | 500 | 500 | 1000 | 1000 | 1000 | 1000 | 1000 | 500 | 1000 | 1000 | 1000 | 500 | 500 |
| | Radiation dose (Mrad) | | 7 | 7 | 6 | 7 | 7 | 7 | 6 | 7 | 7 | 7 | 7 | 6 | 6 |

EP 4 495 171 A1

13

| | | Example 1 | Example 2 | Example 3 | Example 4 | Example 5 | Example 6 | Example 7 | Example 8 | Example 9 | Example 10 | Example 11 | Comparative Example 1 | Comparative Example 2 |
|---|---|---|---|---|---|---|---|---|---|---|---|---|---|---|
| Physical properties of foam sheet | Thickness (mm) | 0.2 | 0.3 | 0.3 | 0.3 | 0.3 | 0.5 | 0.5 | 0.5 | 0.5 | 0.5 | 0.5 | 0.3 | 0.3 |
| | Density (g/cm$^3$) | 0.22 | 0.20 | 0.20 | 0.20 | 0.20 | 0.13 | 0.13 | 0.10 | 0.20 | 0.20 | 0.2 | 0.20 | 0.13 |
| | Expansion ratio (folds) | 4.5 | 5 | 5 | 5 | 5 | 8 | 8 | 10 | 5 | 5 | 5 | 5 | 8 |
| | Average cell size ($\mu$m) | 171 | 158 | 172 | 188 | 188 | 210 | 251 | 165 | 163 | 159 | 171 | 72 | 131 |
| | Oblateness of MD of cell (MD/ZD) | 4.2 | 3.6 | 3.96 | 4.2 | 12.25 | 3.24 | 3.84 | 2.1 | 3.6 | 3.6 | 3.6 | 1.44 | 1.92 |
| | Oblateness of TD of cell (TD/ZD) | 12.25 | 9 | 10.89 | 12.25 | 3.90 | 7.29 | 10.24 | 3.06 | 9 | 9 | 9 | 1.44 | 2.56 |
| | Larger oblateness of MD and TD of cell | 12.25 | 9 | 10:89 | 12.25 | 12.25 | 7.29 | 10.24 | 3.06 | 9 | 9 | 9 | 1.44 | 2.56 |
| | 25% compressive strength (kPa) | 63 | 71 | 59 | 53 | 58 | 69 | 64 | 47 | 52 | 49 | 50 | 98 | 89 |
| | Interlaminar strength (MPa) | 0.91 | 1.22 | 1.12 | 1.09 | 1.05 | 1.02 | 0.89 | 1.04 | 1.64 | 1.40 | 1.17 | 2.60 | 1.03 |
| | Closed cell ratio (%) | 99 | 98 | 100 | 99 | 99 | 99 | 100 | 98 | 98 | 98 | 98 | 99 | 98 |
| | Gel fraction (%) | 51 | 53 | 42 | 54 | 54 | 56 | 47 | 53 | 53 | 53 | 53 | 33 | 45 |
| | Permanent strain | 21 | 19 | 22 | 25 | 24 | 21 | 23 | 19 | 22 | 21 | 23 | 6 | 9 |
| Evaluation | Wrinkles of foam sheet | Good | Good | Good | Good | Good | Good | Good | Good | Good | Good | Good | Poor | Poor |

From the evaluation results of the foam sheets of Examples 1 to 11 and Comparative Examples 1 and 2, it was found that when the foam sheet had a permanent strain of 15% or more, occurrence of wrinkles after the foam sheet was wound was prevented.

Reference Signs List

1 Screen
2 Foam tape
3 Housing
11 Foam sheet
12 Adhesive
13 Jig
14 Jig
15 Cutting

**Claims**

1.   A foam sheet having a permanent strain of 15% or more, the permanent strain occurring as a result of compressing the foam sheet for a minute by stress of 1.2 MPa per 100 mm$^2$.

2.   The foam sheet according to claim 1, having a 25% compressive strength of 600 kPa or less.

3.   The foam sheet according to claim 1 or 2, having an interlaminar strength of 0.6 MPa or more.

4.   The foam sheet according to any one of claims 1 to 3, having a closed cell ratio of 80% or more.

5.   The foam sheet according to any one of claims 1 to 4, having a gel fraction of 30 to 80%.

6.   The foam sheet according to any one of claims 1 to 5, wherein a larger oblateness of an oblateness of MD and an oblateness of TD of a cell is 3 or more.

7.   The foam sheet according to any one of claims 1 to 6, having a density of 0.05 to 0.3 g/cm$^3$.

8.   The foam sheet according to any one of claims 1 to 7, having a thickness of 0.03 to 2 mm.

9.   The foam sheet according to any one of claims 1 to 8, having an average cell size of 40 to 400 $\mu$m.

10.  A pressure-sensitive adhesive tape comprising the foam sheet according to any one of claims 1 to 9 and a pressure-sensitive adhesive material provided on at least one surface of the foam sheet.

EP 4 495 171 A1

Fig. 1

16

## INTERNATIONAL SEARCH REPORT

International application No.

**PCT/JP2023/010864**

### A. CLASSIFICATION OF SUBJECT MATTER

*C08J 9/04*(2006.01)i; *C09J 7/26*(2018.01)i
FI:  C08J9/04 CEZ; C09J7/26

According to International Patent Classification (IPC) or to both national classification and IPC

### B. FIELDS SEARCHED

Minimum documentation searched (classification system followed by classification symbols)

C08J9/00-9/42; C09J7-00-7/50; B32B1/00-43/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2017/171063 A1 (SEKISUI CHEMICAL CO., LTD.) 05 October 2017 (2017-10-05) entire document, in particular claims, paragraphs [0012], [0013], [0017], [0033], [0040], [0041], [0045]-[0048], fig. 2 | 1-6, 8-10 |
| A | JP 2000-344924 A (MITSUI CHEMICALS, INC.) 12 December 2000 (2000-12-12) entire document | 1-10 |
| A | JP 2009-190195 A (SEKISUI CHEMICAL CO., LTD.) 27 August 2009 (2009-08-27) entire text | 1-10 |
| A | JP 2020-139091 A (SEKISUI CHEMICAL CO., LTD.) 03 September 2020 (2020-09-03) entire text | 1-10 |
| A | JP 2014-070174 A (SEKISUI CHEMICAL CO., LTD.) 21 April 2014 (2014-04-21) entire text | 1-10 |
| A | WO 2006/043570 A1 (SEKISUI CHEMICAL CO., LTD.) 27 April 2006 (2006-04-27) entire text | 1-10 |

☐ Further documents are listed in the continuation of Box C.   ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **07 June 2023** | **20 June 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

<div style="text-align:center">

**INTERNATIONAL SEARCH REPORT**
Information on patent family members

</div>

| | International application No. |
|---|---|
| | **PCT/JP2023/010864** |

| Patent document cited in search report | | | Publication date (day/month/year) | Patent family member(s) | | | Publication date (day/month/year) |
|---|---|---|---|---|---|---|---|
| WO | 2017/171063 | A1 | 05 October 2017 | CN | 108431106 | A | |
| | | | | KR | 10-2018-0132631 | A | |
| JP | 2000-344924 | A | 12 December 2000 | US | 2003/0013778 | A1 | |
| | | | | entire text | | | |
| | | | | EP | 997493 | A1 | |
| | | | | ID | 23703 | A | |
| | | | | HK | 1025109 | A | |
| | | | | TW | 247777 | B | |
| | | | | KR | 10-2000-0029393 | A | |
| | | | | CN | 1253148 | A | |
| | | | | MY | 140493 | A | |
| JP | 2009-190195 | A | 27 August 2009 | (Family: none) | | | |
| JP | 2020-139091 | A | 03 September 2020 | (Family: none) | | | |
| JP | 2014-070174 | A | 21 April 2014 | (Family: none) | | | |
| WO | 2006/043570 | A1 | 27 April 2006 | US | 2008/0003421 | A1 | |
| | | | | entire text | | | |
| | | | | EP | 1647384 | A1 | |
| | | | | KR | 10-2007-0072880 | A | |
| | | | | CN | 101039795 | A | |
| | | | | AT | 408489 | T | |
| | | | | ES | 2312900 | T | |
| | | | | PL | 1647384 | T | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015187232 A